Europäisches Patentamt

European Patent Office

Office européen des brevets

(11) Veröffentlichungsnummer: **0 198 372**

**A2**

# (12) EUROPÄISCHE PATENTANMELDUNG

(21) Anmeldenummer: 86104683.7

(22) Anmeldetag: 05.04.86

(51) Int. Cl.4: **H02P 5/408** , H02P 5/40

(30) Priorität: 16.04.85 DE 3513510

(43) Veröffentlichungstag der Anmeldung:
22.10.86 Patentblatt 86/43

(84) Benannte Vertragsstaaten:
CH DE FR GB LI NL SE

(71) Anmelder: Hans Heynau GmbH
Moosacher Strasse 51
D-8000 München 40(DE)

(72) Erfinder: **Dörner, Karlheinz**
**Herbststrasse 8**
**D-8047 Karlsfeld(DE)**

(74) Vertreter: **Pohl, Heribert, Dipl.-Ing et al**
**Standard Elektrik Lorenz AG Patent- und**
**Lizenzwesen Kurze Strasse 8 Postfach 300**
**929**
**D-7000 Stuttgart 30(DE)**

(54) **Verfahren und Anordnung zur Steuerung eines Asynchronmotors.**

(57) Es wird ein Verfahren und eine Anordnung zur Steuerung eines über einen Frequenzumrichter gespeisten Asynchronmotors beschrieben, welche mit Hilfe eines in einem Mikrocomputer verwirklichten Modell erfolgt, dem die Typenschilddaten des Asynchronmotors oder daraus unmittelbar abgeleitete Daten zugeführt werden.

EP 0 198 372 A2

Fig.1

$$\omega_{2N} = \frac{1}{T_R} \cdot \frac{i_{qN}}{i_{dN}}$$

angeben, wobei iqN, idN und $T_R$ unbekannte Größen sind.

$$K_1 = \frac{i_{qN}}{i_{dN}}$$

eine motorabhängige Konstante darstellt, so kann $T_R$ auf einefache Weise mit

$$T_R = K_1 \cdot \frac{1}{\omega_{2N}}$$

(Gleichung X) bestimmt werden.

Da $K_1$ tatsächlich jedoch eine motorspezifische, aber unbekannte Größe ist, wird bei der Berechnung anstelle des unbekannten, dem jeweiligen Motor zugehörigen Wertes $K_1$ ein aus dem Betrieb verschiedener Motoren empirisch gewonnener Mittelwert $\overline{K_1}$ eingesetzt. Dieser fest eingestellte Mittelwert $\overline{K_1}$ kann zwar von der tatsächlichen Größe $K_1$ des betriebenen Motors abweichen, jedoch werden mit dem auf diese Weise ermittelten Parameter $T_R$ beim Regelverfahren für eine Vielzahl verschiedener Motoren bereits sehr gute Ergebnisse erzielt.

Eine größere Genauigkeit der Bestimmung der Rotorzeitkonstanten $T_R$ wird bei näherungsweiser Anpassung des in Gleichung X verwendeten Wertes $K_1$ an den dem Motor entsprechenden Wert $\overline{K_1}$ unter geeigneter Auswertung des eingegebenen cos $\phi$ des Motors erreicht. Dazu entnimmt die Recheneinheit der Regeleinheit in Abhängigkeit vom eingegebenen cos $\phi$ einer empirisch ermittelten Tabelle einen angepaßten Wert $\overline{K_1}$ und übergibt diesen an die Regeleinheit. Die empirisch ermittelte Tabelle ist darüberhinaus der Ausgangsleistung des von der Regeleinheit gesteuerten Wechselrichters angepaßt.

Wird davon ausgegangen, daß

Die magnetisierende Stromkomponente $i_d$ wird aus dem Nennstrom und dem cosinus $\phi$ des Motors mit

$$i_d = K_2 \cdot I_N \cdot \cos \phi$$

abgeleitet, wobei $K_2$ eine der Ausgangsleistung des Wechselrichters angepaßte Konstante ist.

Die erfindungsgemäße Lösung weist den Vorteil auf, daß jeder Anwender des über einen Frequenzumrichter gespeisten Asynchronmotors ohne Detailkenntnisse über die Regeleinheit einen beliebigen, bei ihm vorhandenen Asynchronmotor an die Steuereinrichtung anschließen kann.

Vorteilhafte Einzelheiten der Erfindung sind in den Ansprüchen 2 bis 4 enthalten. Die Erfindung ist nachstehend anhand der Figuren 1 bis 3 näher erläutert. Es zeigen:

Fig. 1 die Prinzipanordnung zur Steuerung des über einen Frequenzumrichter gespeisten Asynchronmotors,

Fig. 2 die Prinzipanordnung der Regeleinheit mit einigen Eingabeeinheiten sowie einer Anzeigeeinheit und

Fig. 3 eine Ergänzung der Prinzipanordnung gemäß Fig. 1.

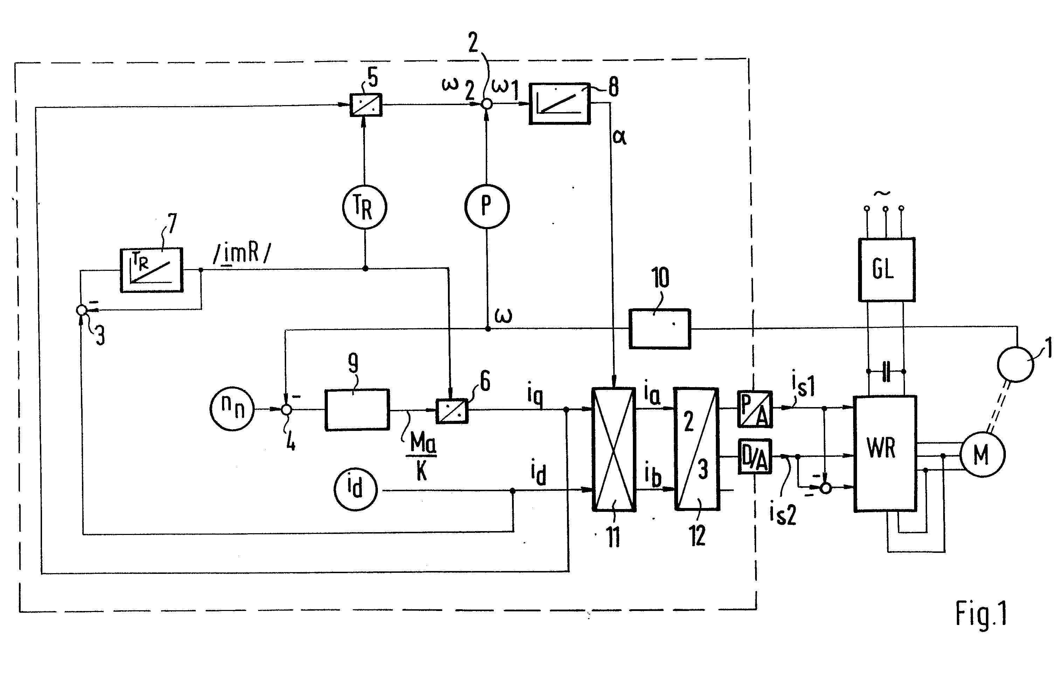

Fig. 1 verdeutlicht den prinzipiellen Aufbau einer Anordnung zur Steuerung eines über einen Frequenzumrichter gespeisten Asynchronmotors, beispielsweise eines Drehstromasynchronmotors.

Diese Anordnung setzt sich aus der Regeleinheit und der Leistungseinheit zusammen. Als Regeleinheit wird die innerhalb des strichliert gezeichneten Kastens vorhandene Anordnung betrachtet, während die Leistungseinheit aus dem Gleichrichter GL, dem Wechselrichter WR und dem Asynchronmotor M besteht. Mit der Läuferwelle des Asynchronmotors M gekoppelt ist der Impulsgeber 1. Die von ihm Betrieb des Asynchronmotors M erzeugten Impulse werden der Regeleinheit zugeführt.

Die Regeleinheit besteht aus dem Addierer 2, den Subtrahierern 3 und 4, den Dividierern 5 und 6, den Integratoren 7 und 8, dem Drehzahlregler 9, dem Zähler 10, dem Koordinatentransformator 11 und der Phasenspalteinrichtung 12. Diesen Einheiten der Regeleinheit, welche in der aus Fig. 1 ersichtlichen Weise miteinander verknüpft sind, werden zusätzlich mittels der aus dem Typenschild entnommenen Daten die Daten eingegeben bzw. daraus die Parameter berechnet. Lediglich die Istdrehzahl wird als Regelgröße aus dem Signal des Impulsgebers in der Weise gewonnen, daß im Zähler 10 während einer bestimmten Zeiteinheit die vom Impulsgeber erzeugten Impulse gezählt werden, woraus in der Regeleinheit die Istdrehzahl errechnet wird.

In der Regeleinheit werden die noch unbekannten Größen berechnet. In der eingangs angegebenen Gleichung (1) sind $i_d$ und $T_R$ die aus den Motordaten bestimmbaren Parameter. Mit dieser Gleichung (1) kann somit die noch unbekannte Größe /imR/ berechnet werden. Dies geschieht im Subtrahierer 3 und Integrator 7, wo aus den Eingangsgrößen $i_d$ und $T_R$ die Ausgangsgröße /imR/ erzeugt wird.

Bei der Gleichung (2) sind dann /imR/ (mittels Gleichung (1) berechnet) und der Wert Ma/K bekannt, so daß mit der Gleichung (2) die Komponente $i_q$ berechnet werden kann. Ma ist ein vom Drehzahlregler 9 erzeugter Drehmomentbefehl und K eine motorabhängige Konstante, die aber in der gezeigten Anordnung der Regeleinheit nicht explizit mitgeteilt werden muß, weil der Frequenzumrichter mit Drehzahlregelung betrieben wird. Der Drehzahlgeber 9 liefert am Ausgang den Wert Ma/K, d.h. die unbekannte Größe K wird über die Einstellung der Reglerparameter, mit der Reglerverstärkung verknüpft, eingegeben.

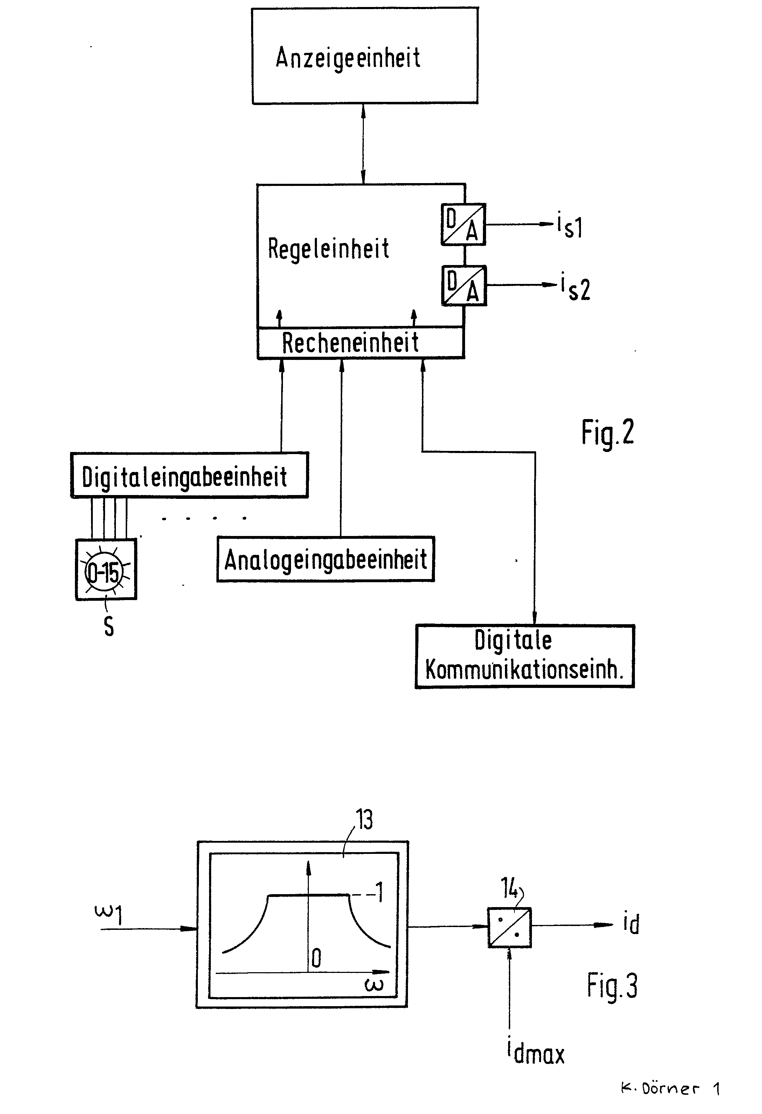

Fig. 2 verdeutlicht die Einheiten, welche mit der Regeleinheit bei der Durchführung des erfindungsgemäßen Verfahrens zusammenwirken. Ein Teil der Regeleinheit ist die Recheneinheit, welcher aus der Digitaleingabeeinheit vorgewählte Daten zugeführt werden. Diese Daten, nämlich die auf dem Typenschild des Asynchronmotors angegebenen Daten, werden durch eine entsprechende Anzahl von Stufenschaltern S in der Digitaleingabeeinheit erzeugt. Jeder Stufenschalter besitzt beispielsweise sechzehn Schaltstufen und ist über vier Leitungen mit der Digitaleingabeeinheit verbunden. Jeder Schalterstellung entspricht eine Binärzahl, welcher ein in der Digitaleingabeeinheit gespeichertes Datum, z.B. eine bestimmte Istdrehzahl, entspricht. Wenn diese bestimmte Binärzahl mit dem Schalter S eingestellt wird, dann führt die Digitaleingabeeinheit das entsprechende Datum der Recheneinheit zu, welche den entsprechenden Parameter berechnet. Gleichzeitig wird das Datum in der Anzeigeeinheit, beispielsweise einem Flüssigkristalldisplay, angezeigt.

Außer der Digitaleingabeeinheit, mit welcher die auf dem Typenschild angegebenen oder aus diesen unmittelbar ableitbaren Daten der Regeleinheit bzw. der Recheneinheit zugeführt werden, können auch noch andere Einheiten mit der Regeleinheit zusammenwirken. Das kann beispielsweise eine Analogeingabeeinheit oder eine digitale Kommunikationseinheit sein. Bei der digitalen Kommunikationseinheit handelt es sich nicht um eine Einheit, welche der Regeleinheit bestimmte manuell ausgewählte Daten zuführt, sondern um eine Einheit, die eine digitale Kommunikation mit übergeordneten Rechnersystemen ermöglicht - (Dateneingabe und Datenausgabe wird durch Befehle des übergeordneten Rechnersystems gesteuert).

Fig. 3 zeigt eine Einheit, welche die Regeleinheit gemäß Fig. 1 in der Weise ergänzt, daß der Asynchronmotor auch mit Feldschwächung, d.h. mit einer über der Nenndrehzahl liegenden Drehzahl, betrieben werden kann, ohne daß der Frequenzumrichter übersteuert wird.

Die Einheit gemäß Fig. 3 ist in die Regeleinheit gemäß Fig. 1 dort eingefügt, wo $i_d$ zugeführt wird. Sie besteht aus einem nichtlinearen Funktionsgeber 13, beispielsweise einer in der Rechnereinheit gespeicherten Tabelle. Der Ausgang des Funktionsgebers 13 ist mit dem Multiplizierer 14 verbunden, in dem das normierte Ausgangssignal des nichtlinearen Funktionsgebers mit dem aus den Motordaten gewonnenen Parameter $i_{dmax}$ multipliziert wird. Das Produkt ist die Längskomponente des Primärstromvektors zur Steuerung des Magnetisierungsstromvektors. $\omega$, ist die zum Summenwinkel gehörende Frequenz des Rotorflußvektors.

Bezugszeichenliste
1 Impulsgeber 2 Addierer 3 Subtrahierer 4 Subtrahierer 5 Dividierer 6 Dividierer 7 Integrator 8 Integrator 9 Drehzahlregler 10 Zähler 11 Koordinatentransformator 12 Phasenspalteinrichtung 13 Funktionsgeber 14 Multiplizierer

**Ansprüche**

1. Verfahren zur Steuerung eines über einen Frequenzumrichter gespeisten Asynchronmotors, bei welchem ein Primärstromvektor aus zwei Komponenten gebildet wird, von denen die eine nur das Drehmoment und die andere nur den Magnetfluß bestimmt, und wobei ein aus der Schlupffrequenz abgeleiteter Feldwinkel mit dem Läuferdrehwinkel zu einem Summenwinkel aufsummiert wird und wobei zur Stromsteuerung des Umrichters ein Ständerstromvektor aus den zwei Stromkomponenten und dem Summenwinkel errechnet wird, bei dem weiterhin der Feldwinkel durch eine zeitdiskrete Summierung aus einer schlupffrequenzproportionalen Größe $\omega_2$ aufintegriert wird und der Magnetisierungsstrom $/\underline{i}mR/$, die drehmomentbildende Stromkomponente $i_q$ und die schlupffrequenzproportionale Größe $\omega_2$ aus vorgebbaren Steuergrößen für das Drehmoment und den Fluß nach den, einige Parameter enthaltenden Gleichungen:

$$1. \quad i_d = \frac{LR}{RR}\ \frac{d/imR/}{dt}\ +\ /\underline{i}mR/$$

$$2. \quad \frac{Ma}{K} = /\underline{i}mR/\cdot i_q$$

$$3. \quad i_q = \omega_2\ \frac{LR}{RR}\ /\underline{i}mR/$$

gebildet werden, **dadurch gekennzeichnet,** daß diese Parameter aus den motorabhängigen, auf dem Typenschild angegebenen oder aus diesen unmittelbar ableitbaren Daten erzeugt werden.

2. Verfahren nach Anspruch 1, dadurch gekennzeichet, daß bei der Bildung der Komponenten weitere anwendungsspezifische Daten berücksichtigt werden.

3. Anordnung zur Durchführung des Verfahrens nach den Ansprüchen 1 und 2 mit einer Regeleinheit zur Ausführung des Verfahrens nach dem Oberbegriff des Anspruchs 1, dadurch gekennzeichnet, daß sie zusätzlich mit Eingabeund Anzeigeeinheiten für die Betriebsdaten versehen ist.

4. Anordnung nach Anspruch 3, dadurch gekennzeichnet, daß sie je eine Einheit zur analogen bzw. digitalen Eingabe von Sollwerten oder Parametern aufweist.

Fig.1

0 198 372

K. Dörner 1

0 198 372

Anzeigeeinheit

Regeleinheit

$i_{s1}$

$i_{s2}$

Recheneinheit

Digitaleingabeeinheit

0-15

S

Analogeingabeeinheit

Digitale Kommunikationseinh.

Fig.2

$\omega_1$

13

-1

0

$\omega$

14

$i_d$

$i_{dmax}$

Fig.3

K. Dörner 1